# EUROPEAN PATENT SPECIFICATION

(11) **EP 3 967 555 B1**
(45) Date of publication and mention of the grant of the patent: **02.11.2022**
(21) Application number: 20195926.9
(22) Date of filing: 14.09.2020
(51) Int. Cl.: B60R 9/042, B60R 9/06

(54) **LOAD CARRIER**
LASTENTRÄGER
SUPPORT DE CHARGE

(43) Date of publication of application: 16.03.2022
(73) Proprietor: Thule NV, 8930 Menen (BE)
(72) Inventor: ZWANENBURG, Guido, 9031 Drongen (BE)
(74) Representative: Novagraaf Group

(56) References cited:
- WO-A1-2013/085842
- DE-U1-202017 105 069
- US-A1- 2003 099 531
- US-A1- 2014 308 101

## Description

### FIELD OF THE INVENTION

The invention relates to a load carrier, in particular a bike carrier, which is mountable on the rear of a vehicle.

### BACKGROUND

Load carriers for attachment to the rear of vehicles are known in the prior art, for example from US 2003/099531 A1. Such load carriers are very popular especially for recreational vehicles and vans, as access to the roof and roof-mounted support systems is more difficult with these types of vehicles. Furthermore, it is advantageous, especially with heavier objects to be transported, if these need not be lifted for attachment to the load carrier, since this is cumbersome and unergonomic for the user. Furthermore, rear-mounted load carriers comprise the advantage that they are easily accessible from the rear of the vehicle.

However, known load carrier systems have the disadvantage that the areas on which the objects to be transported are to be supported are still located relatively high and the objects must therefore still be raised to a comparatively high level. In the prior art this disadvantage was addressed with systems in which the support areas or support sections were designed to be movable so that they can be lowered for loading purposes. In this connection, mechanisms are known in which the support sections can be pivoted down in order to reduce the distance the objects have to be lifted. Furthermore, systems are known in which the support sections are arranged so that they can move in vertical direction. These systems can be configured in such a way that the support sections can be brought essentially to ground level, which greatly simplifies the loading on these support sections. For example, heavy bikes, such as E-bikes, can then be pushed onto the support section, which essentially eliminates the need for lifting. Known mechanisms, however, are often prone to malfunction and do not fulfill safety requirements.

### SUMMARY

Thus, there is a need for an improved load carrier which prevents or at least reduces the above mentioned disadvantages.

According to the present disclosure, a load carrier according to independent claim 1 is provided. Advantageous further developments are subject of the dependent claims.

In addition, other desirable features and characteristics will become apparent from the summary and detailed description, and the appended claims, taken in conjunction with the accompanying drawings.

Disclosed is a load carrier which is mountable on the rear of a vehicle. The load carrier can be a bike carrier. Vehicles can be e.g. a recreational vehicle or a van, wherein it is also possible to attach the load carrier to a caravan or other suitable trailers.

The load carrier comprises a supporting arrangement for supporting a load to be transported. The supporting arrangement may comprise a loading platform. The load carrier may comprise a movement mechanism or shifting mechanism. The movement mechanism is embodied as a lifting mechanism which is adapted to move the supporting arrangement between a raised position and a lowered position. The load carrier further comprises a locking mechanism which is adapted to releasably lock the supporting arrangement in the raised position. The locking mechanism is configured to automatically establish locking when the supporting arrangement reaches the raised position.

In a comparative example, instead of a lifting mechanism, the movement mechanism or shifting mechanism may be configured such that it does not or not substantially change the height of the supporting arrangement upon operation of the same when the load carrier is mounted. For example, the load carrier may be a load carrier which is mounted on a trailer, for example a caravan. Such a load carrier may for example be mounted on the trailer chassis or caravan chassis, for example at a forward end portion of the trailer. The latter arrangement can be an A-frame mountable load carrier. Such load carriers may comprise a shifting mechanism for translating the load carrier horizontally forwards and backwards in order to grant access to a compartment on the trailer, for example a front compartment of a caravan. Such an A-frame mountable load carrier may comprise a movement mechanism as exemplary described herein with respect to the lifting mechanism with the difference that the movement direction is differently oriented, namely horizontally.

The locking mechanism may also be used in connection with such load carrier arrangements and may comprise the same features with different orientation. For example, the locking mechanism may be configured to releasably lock the bike carrier in a travel position and to allow an extension to an access position when the locking mechanism is unlocked. In such load carriers, the movement mechanism is not used for allowing an easier loading but for granting access. Such a mechanism may also be used in rear mounted bike carriers that are mounted on a towing hitch in order to grant access to a trunk of a vehicle.

The lifting mechanism comprises a stationary portion fixedly mountable to the vehicle and a movable portion movable relative to the stationary portion. The supporting arrangement is coupled to the movable portion. The locking mechanism may comprise an engaging assembly which is configured to releasably establish a positive locking between the movable portion and the stationary portion of the lifting mechanism, for at least limiting a movement of the movable portion relative to the stationary portion. In the context of the present disclosure, the term "at least limiting movement" is to be understood as including a configuration in which the positive locking leads to an immediate blocking such that a movement of the movable part is fully suspended or prevented, but also as including a configuration in which a movement remains possible to a certain extent, as is for example achieved when an engaging member engages with an opening which has a larger inner size compared to the outer size of the engaging member.

The engaging assembly can be provided on the movable portion so as to be integrally movable with the supporting arrangement. Alternatively, the engaging assembly can be provided on the stationary portion. The engaging assembly can be provided on a lower end portion of the movable portion. Such a configuration provides a good accessibility for a user. However, in other embodiments, the engaging assembly may be arranged at a different position.

The engaging assembly can comprise an engaging portion and the stationary portion can comprise a receiving portion or vice versa. The engaging portion can comprise a pin or a hook like member. The engaging portion is movable between an engaging position in which the engaging portion is engaged with the receiving portion and a release position in which the engaging portion is not engaged with the receiving portion. The receiving portion can be provided in a lower end portion of the stationary portion.

The engaging assembly comprises an urging member which prebiases the engaging portion towards the engaging position. The urging member can comprise a spring, for example a coil spring.

The engaging assembly may comprise an operating member operatively coupled to the engaging portion for moving the engaging portion. The operating member may be operatively coupled to the engaging portion by means of a force transfer member. The force transfer member may be any mechanism that allows the transfer of a force, for example comprising a wire, belt, chain and/or gears. The operating member may comprise or may be operatively coupled to an operating portion configured to be grasped by a user for manually moving the operating member to an unlocking position in which the engaging portion is positioned in the release position.

The stationary portion may comprise a trigger portion adapted to cooperate with the engaging assembly. The operating member may comprise an actuation portion configured to contact the trigger portion or may be operatively coupled to an actuation portion. The trigger portion and the actuation portion may be configured such that the engaging assembly is triggered when the actuation portion, for example an operating member comprising the actuation portion, passes the trigger portion. The actuation portion may contact the trigger portion upon passing the trigger portion. For example, the actuation portion may slidably contact the trigger portion upon passing the trigger portion.

The engaging assembly may comprise a supporting portion. The supporting portion may be a housing. The housing may be cuboid. The supporting portion may be configured for movably supporting, for example translatory movably supporting, the engaging portion and/or the force transfer member. The supporting portion can be configured to pivotably support the operating member thereon. The operating member and the engaging portion can be coupled to each other such that a pivoting movement of the operating member is transferred into a translatory movement of the engaging portion.

The supporting portion may comprise a supporting surface for slidably supporting the operating member thereon. The operating member may comprise a coupling portion for pivotably coupling the engaging portion to the operating member. The operating member can further comprise a cam portion with a cam surface contacting and riding on the supporting surface. The operating member can be prebiased towards the supporting surface. The cam surface can be formed such that the operating member comprises a self-locking capability.

The cam surface can comprise a first surface section contacting the supporting surface when the operating member is in the unlocking position in which the engaging portion is in the release position. The cam surface can comprise a second surface section contacting the supporting surface when the operating member is in the unlocking position in which the engaging portion is in unlocking position. The cam surface can comprise a third surface section connecting the first surface section and the second surface section. The third surface section can be formed as an apex portion.

The load carrier may comprise a drive assembly for driving the movable portion. The drive assembly may be an electric drive assembly. The electric drive assembly may comprise an electric motor for driving the movable portion. The drive assembly can be coupled to a control unit. The control unit can comprise a receiver for wirelessly receiving operating information from a remote controller.

The load carrier may comprise a safety arrangement. The safety arrangement can be configured such that power is supplied to the drive assembly only when the operating member is in the unlocking position. The safety arrangement can comprise a switch. For example, the switch can be a cut-off switch. The cut-off switch can be contact operated and can comprise a contact portion which is to be contacted to operate the switch. The operating member can be configured and arranged such that contact with the switch is released when the operating member is positioned in the unlocking position thereby establishing a power supply.

The safety arrangement can alternatively or additionally be configured to cut off the power supply to the drive assembly when it is detected that an object is clamped between the stationary portion and the movable portion. The safety arrangement can comprise a sensor arrangement, for example a contact sensor arrangement. The sensor arrangement can be provided on a lower end portion of the stationary portion. The sensor arrangement can comprise a movable member protruding from the lower end portion of the stationary portion. The movable member can be a cover, for example an outer cover. The cover can be configured to at least partially cover the lower end portion, for example a portion of a longitudinal end surface, for example facing the movable portion. The sensor arrangement can further comprise a switch, for example a cut-off switch, for cutting off the power supply to the drive assembly. The switch can be operable by the movable member such that it is activated when the movable member has moved by a predetermined distance.

In addition or alternatively, a safety arrangement can be provided which is configured to indicate a correctly established locking of the supporting arrangement in the raised position, i.e. in the transport position. In addition or alternatively, the safety arrangement can be configured to indicate an active power supply. The safety arrangement can comprise an indicator. The indicator can be an optical indicator such as a signal light. The indicator can also be an acoustic indicator. The indicator can be coupled to the cut-off switch.

The lifting mechanism can be configured as a telescoping arrangement in which the stationary portion comprises a first elongate profile and the movable portion comprises a second elongate profile. Optionally, a third elongate profile may be provided. The elongate profiles may be coupled to each other such that adjacent profiles are movable with respect to each other, for example such that adjacent elongate profiles can roll on each other or can slide on each other. Adjacent profiles such as the second profile in the third profile and/or the first profile and the third profile can be movably coupled to each other by means of two coupling portions in such a manner that in a retracted state of the lifting mechanism, coupling positions of the adjacent profiles are arranged at a greater distance from each other than in an extended state of the lifting mechanism. In addition or alternatively, the load carrier can comprise two stationary portions and two movable portions. The locking mechanism, for example the engaging assembly, can be configured to simultaneously establish the releasable positive locking between the movable portions and the stationary portions by means of a single engaging assembly. The engaging assembly may then comprise an engaging portion for each combination of a movable portion and a stationary portion wherein all engaging portions are operatively coupled to one or more operating members which are configured to simultaneously operate all engaging portions.

The locking mechanism can be configured to automatically establish locking when the supporting arrangement reaches the transport position, for example a raised position.

In addition or alternatively, the supporting arrangement can be pivotably coupled to the lifting mechanism so as to be transferable between a stowing state and a use state by pivoting the supporting arrangement towards and away from the lifting mechanism. The supporting arrangement may comprise a locking arrangement for arresting the supporting arrangement in the use state. The locking arrangement may comprise an engaging member. The engaging member can be engageable with a lower end portion of the movable portion. For example, the engaging member can be engageable with a lower portion of the engaging assembly, for example with an opening provided in the lower portion. The locking arrangement can further comprise an operating device which may be a rotatable handle. The operating device can be operatively coupled to the engaging member by a force transfer mechanism. The force transfer mechanism can be fully accommodated in the supporting arrangement, for example in a frame structure of the supporting arrangement. The engaging member can be prebiased towards engagement by means of an urging member.

Additional features and advantages of the above embodiments may be gleaned by the person skilled in the art from the following description of exemplary embodiments, which are not to be construed as limiting.

### BRIEF DESCRIPTION OF THE DRAWINGS

The present invention will hereinafter be described in conjunction with the following drawing figures, wherein like numerals denote like elements.
Figure 1 shows a perspective front view of a load carrier according to an embodiment.
Figure 2 shows the load carrier of Figure 1 in extended configuration.
Figures 3 to 6 shows perspective views of an engaging assembly of a load carrier according to an embodiment.
Figure 7 shows a perspective view of an operating member of the engaging assembly as shown in Figures 3 to 6.
Figure 8 shows a perspective view of a receiving portion of a load carrier according to an embodiment.
Figures 9 and 10 show an engaging assembly of Figures 3 to 6 inserted in a receiving portion of Figure 8 wherein Figure 9 shows a state in which the engaging assembly is in a release state and Figure 10 shows a state in which the engaging assembly is in a locking state.
Figure 11 shows a sectional view of Figure 9 from a different perspective.
Figure 12 shows a sectional view of Figure 10 from a different perspective.
Figures 13 and 14 shows a possible configuration of the lifting mechanism.
Figure 15 shows a plan sectional view of an engaging assembly of Figures 3 to 6 inserted in a receiving portion of Figure 8.
Figure 16 shows a sectional view of an engaging portion of a supporting arrangement.
Figure 17 shows details of a possible configuration of a locking arrangement.

All figures are only schematic depictions of exemplary embodiments in which, in particular, distances and dimensional correlations are not presented to scale.

### DETAILLED DESCRIPTION OF EMBODIMENTS

The following detailed description is merely exemplary in nature and is not intended to limit application and uses. Furthermore, there is no intention to be bound by any theory presented in the preceding background or summary or the following detailed description.

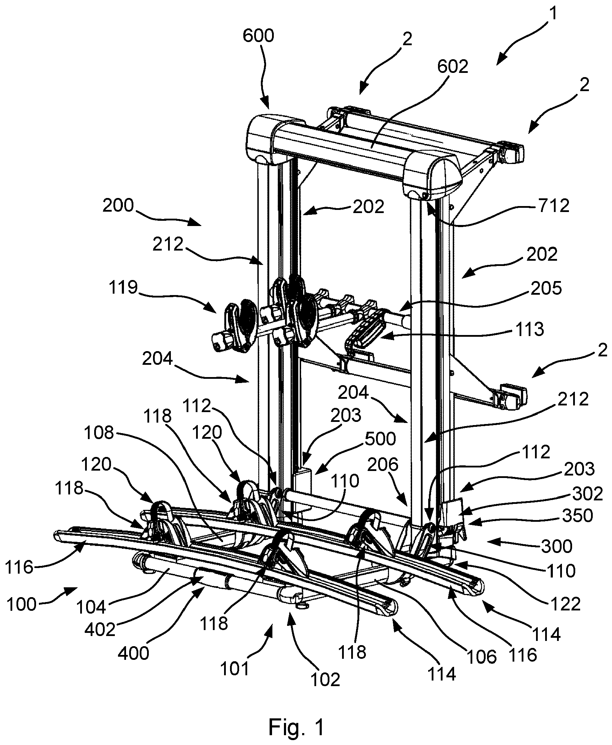

Figure 1 shows a perspective view of a load carrier 1 according to an embodiment. The load carrier 1 comprises a supporting arrangement 100 and a movement mechanism 200 which in the present embodiment is configured as a shifting mechanism. Since shifting takes place in the height direction in the load carrier 1 according to the embodiment, such a shifting mechanism will be referred to as lifting mechanism in the following. However, the movement mechanism may be configured such that the movement takes place in another direction, for example in a horizontal direction. Such an arrangement may be used on A-frame load carriers for caravans, for instance, in which the load carrier is mounted on a front end of the caravan. In such arrangements, the movement mechanism can be constructed similar but is installed and used in a different orientation. Accordingly, in a further embodiment, a load carrier may be provided with a supporting arrangement which is horizontally movable.

The supporting arrangement 100 is configured to support a load to be transported. In general, different configurations of such a supporting arrangement 100 can be realized. For example, supporting arrangement 100 may be configured such that a load to be transported is supported from below. On the other hand, it is also conceivable to provide a supporting arrangement 100 on which a load to be transported may be loaded in a hanging manner. According to the embodiment, the supporting arrangement 100 comprises a loading platform 101.

The loading platform 101 may comprise a frame structure 102. According to the embodiment as shown in Figure 1, the frame structure 102 comprises a cross member 104 and two elongate members 106, 108. The cross member 104 and the elongate members 106, 108 comprise profiles which may be manufactured by aluminum extrusion. However other manufacturing methods are also conceivable. The profiles may be closed profiles or may be profiles which are partially open. As is further shown in Figure 1, the cross member 104 and the elongate members 106, 108 may be coupled to each other to form a C-shape. In other words, the cross member 104 and the elongate members 106, 108 may be formed substantially straight and the cross member 104 may be coupled to end portions of the elongate members 106, 108 to form the C-shape. Furthermore, the elongate members 106, 108 may be arranged so as to extend substantially perpendicular to the cross member 104. It is noted that other shapes of the frame structure 102 are also conceivable in which the cross bar 104 and/or the elongate members 106, 108 comprise other shapes including curved portions and kinked portions. In the configuration as shown in Figure 1, the frame structure 102 is formed to define a supporting plane on which further elements of the loading platform 101 may be fixed.

The loading platform 101 may be configured for supporting bikes. For that, the loading platform 101 can comprise a bike supporting arrangement 114 fixedly mounted to the frame structure 102. As is shown in Figure 1, two bike supporting arrangements 114 are provided but the overall number of bike supporting arrangements 114 may be different and may include more than two bike supporting arrangements. Each bike supporting arrangement 114 may be coupled the elongate members 106, 108 of the frame structure 102. Each bike supporting arrangement 114 may comprise a wheel tray 116 and a wheel fixation arrangement 118, preferably two wheel fixation arrangements 118. Each wheel fixation arrangement 118 may be slidably and releasably detachably held on the wheel tray 116 so as to be positionable at different longitudinal positions of the wheel tray 116 depending on the dimensions of a bike to be supported. Each wheel fixation arrangement 118 may comprise a strap 124 forming a fixation loop for a bike wheel.

The supporting arrangement 100 is coupled to the lifting mechanism 200. In the embodiment, the supporting arrangement 100 is pivotably coupled to the lifting mechanism 200. Such a configuration allows the supporting arrangement 100 to be folded towards the lifting mechanism 200 for stowing purposes and to unfold the supporting arrangement 100 for carrying purposes. According to the embodiment, the supporting arrangement 100 comprises coupling members 110 which are fixedly coupled to free end portions of the elongate members 106, 108, that is to the end portions of the elongate members 106, 108 which are not coupled to each other by the cross member 104. Each coupling member 110 comprises a coupling portion 112. Each coupling portion 112 can be pivotably mounted on the lifting mechanism 200, more precisely on a movable portion 204 of the lifting mechanism 200, for example on a second elongate profile 212 of the movable portion 204. Each coupling portion 112 may be pivotably coupled to a lower end portion 206 of the movable portion 204. Accordingly, by moving the movable portion 204, the supporting arrangement 100 is moved as well. The lifting mechanism 200 will be described in greater detail below.

The supporting arrangement 100 may further comprise an engaging portion 122 in the free end portions of the frame structure 102. The engaging portion 122 is configured to be engaged with a lower end portion of the movable portion 204 of the lifting mechanism 200 in order to temporarily prevent a pivoting movement of the supporting arrangement 100 into the stowing position. Accordingly, the engaging portion 122 may be configured to detachably lock the supporting arrangement 100 to the lifting mechanism 200. The engaging portion 122 may form part of a locking arrangement 400 as will be described below. As is already shown in Figure 1, the locking arrangement 400 may comprise an operating device 402 for operating the locking arrangement 400. The operating device 402 may be arranged on the cross member 104. However, it is also possible to arrange the operating device 402 at a different position including a position on the elongate members 106, 108, for instance. Besides the operating device 402 which has to be accessible by a user, other elements of the locking arrangement 400 may be concealed in the supporting arrangement 100, for example in the frame structure 102.

The lifting mechanism 200 of the load carrier 1 is mountable to the rear of a vehicle by means of an upper coupling portion 2 and a lower coupling portion 3. In the embodiment, the load carrier 1 comprises two upper coupling portions 2 and two lower coupling portions 3. The lifting mechanism 200 comprises a stationary portion 202. The stationary portion 202 remains fixed during operation of the lifting mechanism 200 and is coupled to the vehicle by means of the upper and lower coupling portions 2, 3. Furthermore, the lifting mechanism 200 comprises a movable portion 204 the movable portion 204 is movable relative to the stationary portion 202. Since the supporting arrangement 100 is coupled to the movable portion 204 as already mentioned before, the position of the supporting arrangement 100 may be changed by moving the movable portion 204 relative to the stationary portion 202. In the embodiment, the stationary portion 202 and the movable portion 204 are formed as elongate units. In a mounted condition of the load carrier 1, the stationary portion 202 and the movable portion 204 may extend in vertical direction. The stationary portion 202 and the movable portion 204 may be arranged so as to be movable in parallel with respect to each other.

The stationary portion 202 comprises a first end portion 201 which may form an upper end portion in case the stationary portion 202 extends vertically when the load carrier 1 is mounted on a vehicle. In the embodiment as shown in the Figures, the first end portion 201 is an upper end portion. The first end portion 201 may also be a rear portion in case the movement mechanism 200 is oriented horizontally as is conceivable in connection with the above mentioned A-frame mountable load carriers. The stationary portion 202 further comprises a second end portion 203. In the embodiment, the second end portion 203 is a lower end portion. The second end portion 203 may also be a front end portion in case the movement mechanism 200 is oriented horizontally as is conceivable in connection with the above mentioned A-frame load carriers. A receiving portion 500 which will be described later in greater detail is provided at the second end portion 203. The receiving portion 500 is configured to cooperate with a locking mechanism 300 provided on the movable portion 204 of the movement mechanism 200. The locking mechanism 300 will later be described in greater detail although it is already indicated in the embodiment as shown in Figure 1 that such locking mechanism 300 may comprise an engaging assembly 350 and an operating member 302 for operating the locking mechanism 300. It is further noted that an inverse arrangement is also possible. Accordingly, in a modification the receiving portion 500 may be provided on the movable portion 204 and the locking mechanism 300 may be provided on the stationary portion 202.

In the embodiment as shown in the Figures, the load carrier 1 further comprises a drive assembly 600. In the embodiment, the drive assembly 600 is an electric drive assembly. However, it is also possible to provide a drive assembly which is manually driven, for example by means of a crank. It is also possible to provide a drive assembly 600 which is operable both electrically and manually in order to provide for an arrangement that allows an operation in case one of the available operation possibilities comprises a malfunction. In the embodiment, the drive assembly 600 is provided on the first end portion 201, more precisely on an upper end portion 201. The drive assembly 600 comprises a casing 602 accommodating and an electric motor (not shown) as well as components of the force transfer mechanism (not shown) for driving the movable portion 204.

As is further shown in Figure 1, the movable portion 204 may comprise a support member 205. The support member 205 may be arranged to extend between two parallel second elongate profiles 212. In the embodiment, the support member 205 is configured to support a further bike fixation member which is embodied as a frame gripping unit 119. Furthermore, an attachment member 113 is arranged on the support member 205 and configured to hold the supporting arrangement 100 in a stowed position. For that, the attachment member 113 is pivotably mounted on the support member 205 at one end and releasably engageable with the cross member 104 at its other end.

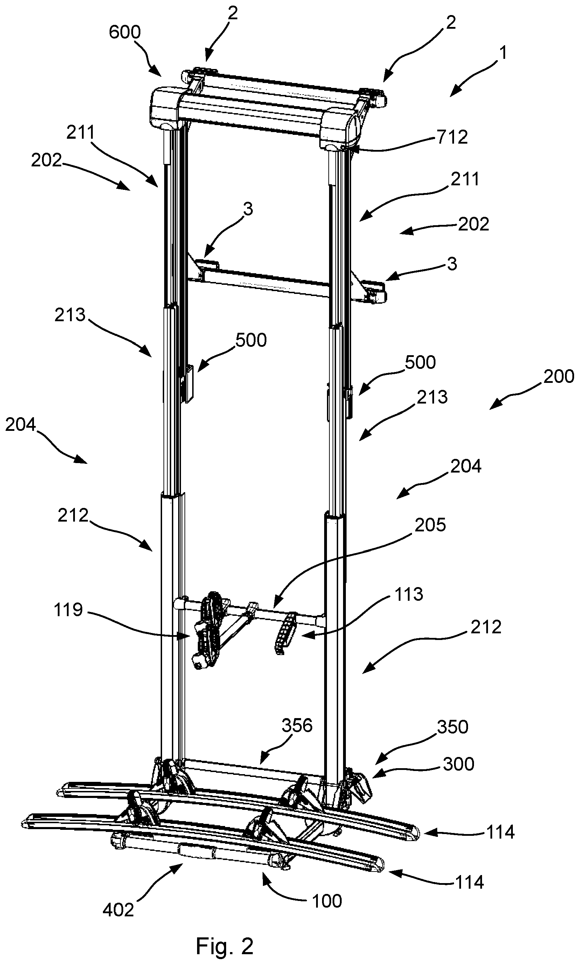

Figure 2 shows the load carrier 1 in an extended condition. As is shown, the lifting mechanism 200 is configured as a three-way telescoping mechanism. The stationary portion 202 comprises the first elongate profile 211. The movable portion 204 comprises a second elongate profile 212 and a third elongate profile 213. The third elongate profile 213 is arranged between the first elongate profile 211 and the second elongate profile 212. Although a configuration with three elongate profiles will be described in the following, it is noted that a different number of elongate profiles may be used. In particular, it is possible that the lifting mechanism 200 comprises a first elongate profile in the stationary portion 202 and a single further elongate profile, for example the second elongate profile 212, in the movable portion 204. Furthermore, it is possible to provide configurations with more than three elongate profiles. Accordingly, while the stationary portion 202 may always comprise a single elongate profile the movable portion 204 may comprise one or more elongate profiles. As can already be gathered from Figures 1 and 2, the elongate profiles may comprise a similar length or the same length.

Although not shown in the Figures, the drive assembly 600 is operatively coupled at least with the second elongate profile 212 so as to drive the second elongate profile 212. For example, the driving device of the drive assembly 600, for example an electric motor, can be operatively coupled to the second elongate profile 212 by means of a force transfer mechanism including one of a wire, a belt, a chain or a gear mechanism. As is further already shown in Figures 1 and 2, an indicator 712 may be arranged in the drive assembly 600, more precisely in the casing 602 of the drive assembly 600. The function of the indicator 712 will be described later in connection with a safety arrangement 700 which may optionally be provided in the load carrier 1.

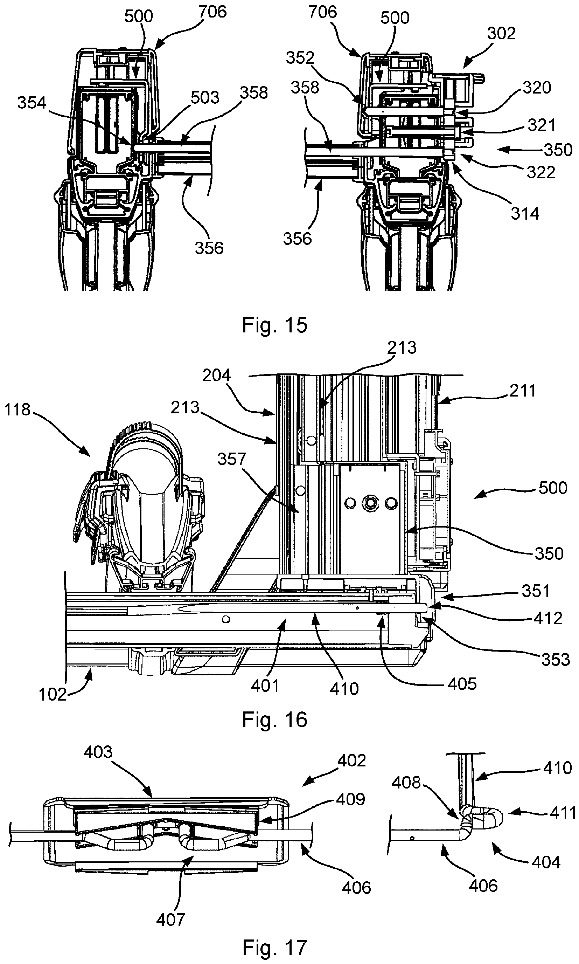

The locking mechanism 300 is configured to lock the second elongate profile 212 with at least the first elongate profile 211. The configuration according to the embodiment comprises two second elongate profiles 212 and the locking mechanism 300 is configured to simultaneously lock the second elongate profiles 212 with at least the first elongate profiles 211. The engaging assembly 350 is configured to establish locking at two positions. For that, the engaging assembly 350 comprises a coupling portion 356 connecting both second elongate profiles 212 as is for example shown in Figure 15. The coupling portion 356 may also be referred to as a force transfer section which is configured to transfer a locking action effected on one of the elongate profiles 212 to the other one of the elongate profiles 212. Accordingly, a mechanism is provided which allows for a simultaneous engagement at both second elongate profiles 212.

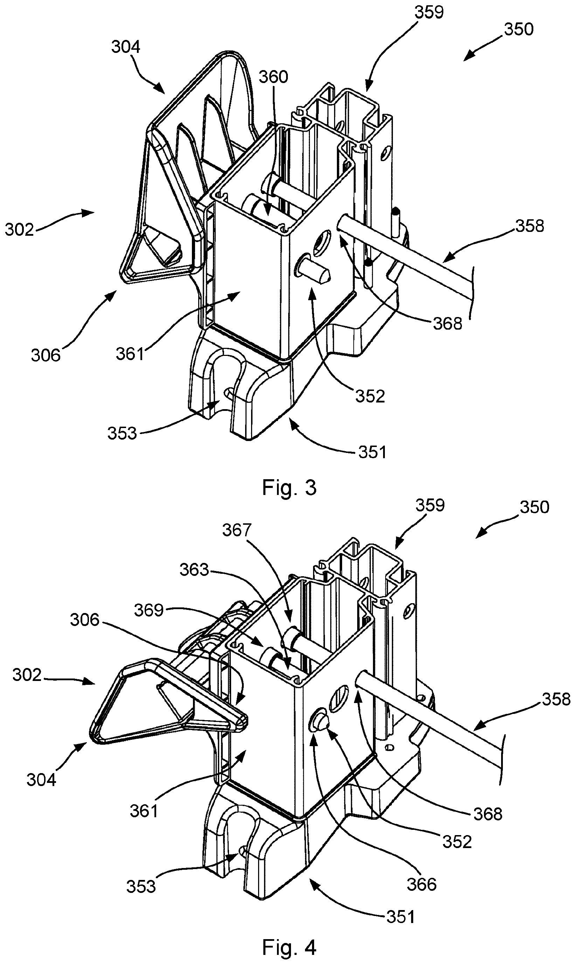

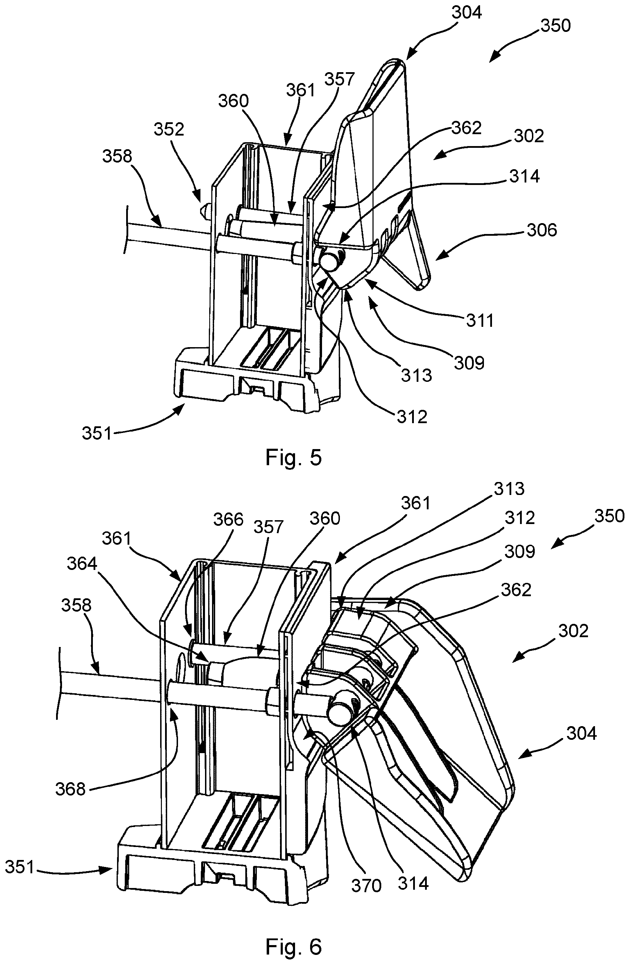

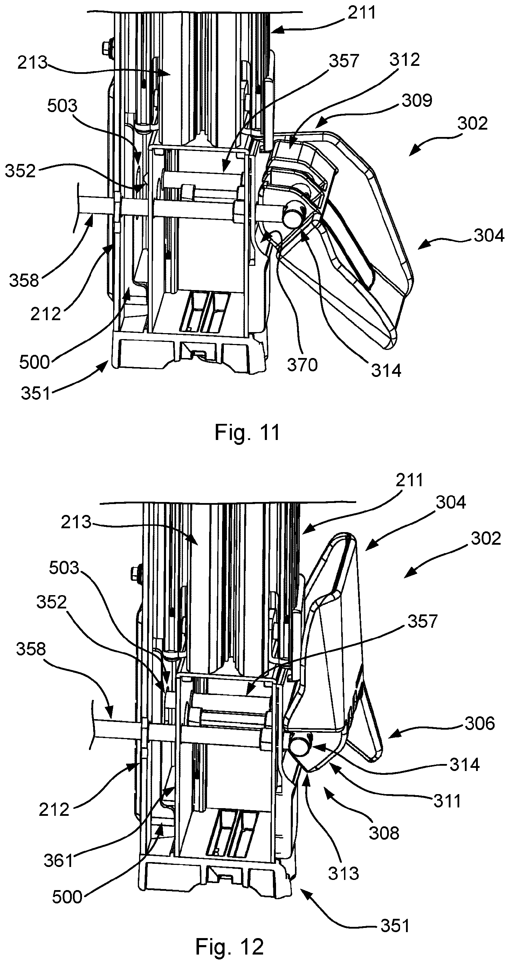

The configuration and the function of the engaging assembly 350 will be described in greater detail with reference to Figures 3 to 12 and Figure 15. The construction of the engaging assembly 350 will first be described with reference to Figures 3 to 6. Figures 3 to 6 show perspective views of components of the engaging assembly 350. Figure 3 and Figure 5 show the engaging assembly 350 in an engaging state whereas Figure 4 and Figure 6 show the engaging assembly 350 in a release state. The engaging assembly 350 comprises an operating member 302 which is configured to operate two engaging portions 352, 354. It is noted that a configuration may be realized, in which only a single engaging portion is provided and operated by the operating member 302. In general, the number of engaging portions to be operated by the operating member may depend on the number of sliding arrangement which are created by combining the before mentioned stationary portion 202 and movable portion 204. For example, the movement mechanism 200 can comprise multiple stationary portions 202 cooperating with a corresponding number of movable portions 204. The engaging assembly 350 can be adapted to the number of movable portions and stationary portions. In principle, it may be enough to provide an engaging assembly 350 which is configured to only lock one stationary portion 202 with one movable portion 204 although more than one stationary portion 202 and movable portion 204 are provided. In order to increase the safety of the load carrier 1, the engaging assembly 350 may be configured such that a multi-locking may be established and released by operating a single operating member 302.

The engaging assembly 350 according to the embodiment comprises a supporting portion 361 which may be a housing and which may be a profile, for example an extruded profile. The supporting portion 361 comprises a coupling portion 359 allowing the supporting portion 361 to be coupled to the movable member 204, for example to the second elongate profile 212. Optionally, the engaging assembly 350 may comprise a lower portion 351 which is configured to cooperate with the locking arrangement 400. Details in this regard will be given below when the locking arrangement 400 is described in greater detail. But as is already visible, the lower portion 351 comprises an opening 353 which is provided for receiving an engaging portion for positively locking the supporting arrangement 100 to the lifting mechanism 200.

Force transfer members 357, 358 are movably held in the supporting portion 361. In the embodiment, multiple openings 366, 367, 368 are provided for supporting and guiding the force transfer members 357, 358. The force transfer members 357, 358 are coupled to the operating member 302. Furthermore, the force transfer members 357, 358 are coupled to the engaging portions 352, 354. In the present embodiment, the force transfer members 357, 358 comprise rods wherein one end portion of each rod is coupled to the operating member 302 and the opposite end portion forms an engaging portion 352, 354. Accordingly, according to the embodiment, the force transfer members and the engaging portions are integrally formed. It is noted that the engaging portions and/or the force transfer members may be configured differently as long as their function is achieved. For example, the force transfer members do not have to be rigid elements. Rather, the force transfer members may be flexible members such as wires or maybe mechanisms consisting of multiple elements including gears which allow the transfer of force from the operating member 302 to the engaging portions. As an example, the force transfer members may be configured by way of a Bowden cable. It is further to be noted that the force transfer members do not need to be constructed in a similar way. Rather, different combinations of different force transfer members for transferring forces to different engaging portions may be used as needed.

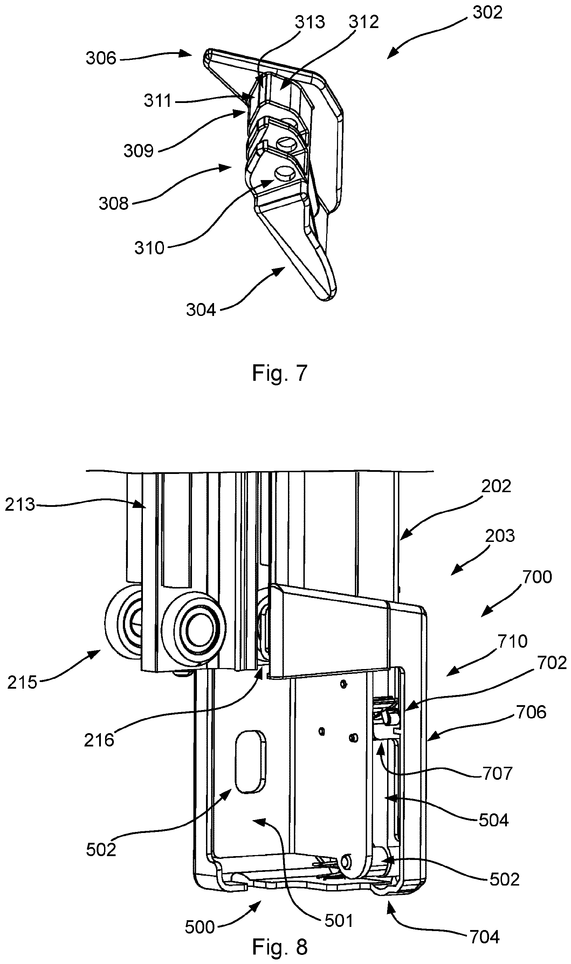

The configuration of the operating member 302 is best seen in Figures 3 to 7. Figure 7 shows a possible configuration of the operating member 302. In the embodiment, the operating member 302 is exemplary embodied as a pivoting lever but it is to be understood that other arrangements are conceivable. For example, rather than pivoting, the operating member may be a pulling/pushing member or maybe a rotating actuator. The operating member may be configured similar to a screw with a very steep threaded profile allowing a large translatory movement already with a small rotation of the operating member. Basically, any construction which transfers the movement of the operating member into a suitable movement of or a suitable force application on the force transfer members may be used. The operating member 302 according to the embodiment comprises an operating portion 304 which is configured to be grasped by a user for manually moving the operating member 302. Furthermore, the operating member 302 comprises a cam portion 308 which is configured to ride on a supporting surface 362 provided on the supporting portion 361. For that, the cam portion 308 comprises a cam surface 309. The cam surface can be an eccentric surface. The cam surface 309 comprises a first surface section 311, a second surface section 312 a third surface section 313. The first surface section 311 is configured to contact the supporting surface 362 when the operating member 302 is in an unlocking position in which the engaging portions are in release position. The second surface section 312 is configured to contact the supporting surface 362 when the operating member 302 is in a locking position in which the engaging portions or the engaging portion are/is in locking position. The third surface section 313 connects the first surface section 311 and the second surface section 312. Furthermore, the third surface section 313 is formed as an apex. The supporting surface may comprise an upper portion which is formed flat and the first surface section 311 and the second surface section 312 may comprise flat surface sections as well. A portion of the supporting surface 362 adjacent a flat section, for example a lower portion, may be curved and a correspondingly curved surface section may be provided in the cam surface. Such a curved surface section allows the operating member 302 to be moved beyond the unlocking position against a restoring force of an urging member (described later) when a force is applied on the operating member 302 wherein the same automatically returns to the unlocking position when no force is applied.

The operating member 302 further comprises a coupling portion 310. The coupling portion 310 is configured to force transmittingly couple the operating member 302 to the force transfer members 357, 358. For that, the coupling portion 310 comprises an opening which is configured to receive a coupling bolt 314. As is shown, the coupling bolt 314 may be a bolt with multiple threaded openings radially penetrating the same at different positions. Some or all threaded openings are configured to receive threaded coupling portions 320, 322 of the force transfer members 357, 358. This is for example clearly visible in Figure 15 which shows a sectional view from above. The coupling bolt 314 is rotatably received in the coupling portion 310. Accordingly, the operating member 302 may be pivoted about the coupling bolt 314. The coupling bolt 314 forms a pivot member. In the embodiment, the pivot member is arranged perpendicular to engaging directions of the engaging portions but a different orientation may also be provided. The pivot member may also be pivotable about an axis which is parallel to the engaging direction of the engaging portions. The pivot member, for example the coupling bolt, may be arranged pivotable about a pivot axis which is perpendicular to the extension direction of the force transfer members 357, 358.

The engaging assembly 350 further comprises an urging member 360 which urges the engaging portions 352, 354 towards the engaging position. In other words, the engaging assembly is configured such that the engaging portions are pre-biased in engaging direction. The urging member 360 may be an elastic element and may in particular comprise a spring, for example a coil spring. In the configuration as shown in the present embodiment, the urging member 360 is arranged on a supporting pin 363. The supporting pin 363 is passed through and movably held in an opening 369 in the supporting portion 361. The supporting pin 363 is coupled to the coupling bolt 314 in a similar manner as the force transfer members 357, 358. In other words, the supporting pin comprises a threaded end portion which is received in a threaded opening in the coupling bolt 314. The urging member 360 is provided on the supporting pin 363. In other words, the supporting pin 363 is passed through the urging member 360. On an end portion of the supporting pin which is opposite to the end portion where the supporting pin is coupled to the coupling bolt 314, an abutment portion 364 is provided. In the embodiment, the abutment portion 364 is provided by way of a bolt head. The urging member 360 is arranged such that it is placed between the bolt head and an inner wall of the supporting portion 361. The urging member 360 is further arranged to prebias the operating member 302 towards the supporting surface 362.

The cam portion 308 and the coupling portion 310 are configured such that a position of the opening in the coupling portion 310 and, thus, of a coupling bolt 314 inserted therein, relative to the supporting portion 361, more precisely a distance between the opening or coupling bolt 314 and the supporting surface 362 on which the cam portion 308 rides, changes during movement of the operating member 302. More precisely, when moving the operating member 302 from an unlocking position as shown in Figures 4, 6, 9, 11 to a locking position as shown in Figures 3, 5, 10, 12, the distance is increased until the third surface section 313 is in contact with the supporting surface 362 and then decreased until the operating member 302 reaches its final position. In this way, a self-locking function is provided which is realized in the manner of an over-dead-center lever mechanism. Accordingly, an operation of the operating member 302 takes place against the urging force of the urging member 360. On the other hand, it is clear that as soon as the dead center of the mechanism is passed, the movement of the operating member 302 is assisted by the urging force of the urging member 360. In this way, a configuration can be achieved in which the operating member 302 automatically snaps into place as soon as the third surface section 313 has passed the sliding surface 362. In a modification, the engaging assembly 350 may be configured such that it is in a loaded condition when the operating member 302 is in the unlocking position. In such a loaded condition, a return movement of the operating member 302 may be blocked by a further securing member which, when disengaged from the operating member 302, allows a movement of the operating member 302 towards the locking position.

With the above described configurations, it is optionally possible to implement an automatic locking function. In other words, the locking mechanism 300 may be configured to automatically establish locking when the supporting arrangement 100 reaches the raised position. For that, the operating member 302 may comprise an actuation portion 306 which is configured to contact or be contacted by a trigger portion 502 as is for example shown in Figure 8. The trigger portion 502 and the actuation portion 306 are configured such that the engaging assembly 350 is triggered when the operating member 302 passes the trigger portion 502. The actuation portion 306 is configured to slidingly contact the trigger portion 502 upon passing the trigger portion 502. The actuation portion 306 and the trigger portion 502 are configured such that a moment can be generated which is high enough to overcome the restoring force of the urging member 360 and moves the operating member 302 beyond the apex portion in the cam portion 308.

With the above configuration of the engaging assembly 350, each engaging portion 352, 354 is movable between an engaging position in which the engaging portion is engaged with the receiving portion 500, and a release position in which the engaging portion 352, 354 is not engaged with a receiving portion 500. The receiving portion 500 may comprise a housing portion 501. The housing portion 501 can be configured such that the engaging assembly 350, for example at least a portion of the supporting portion 361, preferably the entire supporting portion 361 may be accommodated in the housing portion 501 when the movement mechanism 200, for example the lifting mechanism, is in a retracted condition. For example, the housing portion 501 can be configured such that when the engaging assembly 350 is accommodated therein the operating member 302 remains accessible and the lower portion 351 remains outside of the housing portion 500 so as to be for example available for a locking interaction with the supporting arrangement 100. The housing portion 501 can be manufactured by bending a steel plate. For example, the housing portion 501 can be formed such that it comprises two wall portions which are oriented substantially perpendicular with respect to each other. On the other hand, the supporting portion 361 of the engaging assembly 350 can be formed following the shape of the housing portion 501 such that a space-saving accommodation of the engaging assembly 350 is possible in the receiving portion 500. For example, the housing portion 501 is configured such that the engaging assembly 350 can be at least partially received therein by moving the same together with the movable portion 204, for example the second elongate profile 212.

In the embodiment as shown, the engaging assembly 350 is configured such that the force transfer members 357, 358, for example the rods, extend laterally from the supporting portion 361. The force transfer members 357, 358 may extend in parallel and may extend perpendicular to a movement direction of the movable portion 204. The receiving portion 500 comprises an opening 503 for receiving one of the engaging portions 352, 354. Since the receiving portion 500 is fixedly coupled to the stationary portion 202, for example to the first elongate profile 211, the movable portion 204, for example the second elongate profile 212, to which the engaging assembly 350 is mounted, is securely locked to the stationary portion when one of the engaging portions 352, 354 is engaged with the opening 503.

The receiving portion 500 further comprises a trigger portion 502 for actuating the operating member 302. The trigger portion 502 comprises an abutment portion arranged in the receiving portion 500. More precisely, the trigger portion 502 is provided in the receiving portion 500 to serve as a fixed obstacle which the operating member 302 may only pass when it is rotated. In the embodiment, the trigger portion 502 protrudes from an outside surface of the housing portion 501, for example in a direction substantially perpendicular to an outer wall of the housing portion 501. Furthermore, the trigger portion 502 is provided at a lower end portion of the housing portion 501 so that a portion of the engaging assembly 350 to be accommodated in the receiving portion 500 passes the position of the trigger portion 502. The operating member 302 is arranged such that the actuation portion 306 contacts the trigger portion 502 and induces a rotation in the operating member 302 when the supporting portion 361 of the engaging assembly 350 is moved past the trigger portion 502. The trigger portion 502 may comprise a cylindrical shape. The actuation portion 306 or at least a surface thereof coming into contact with the trigger portion 502 may be formed straight.

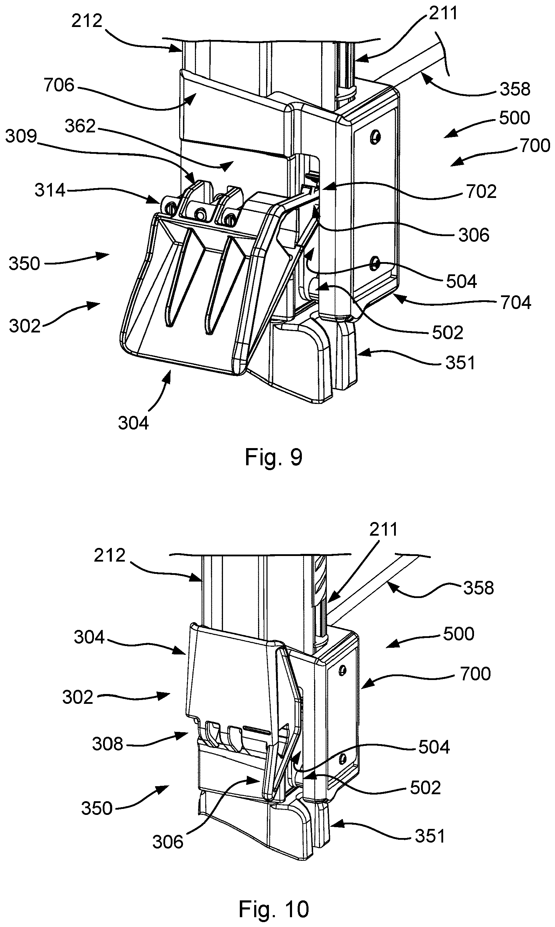

The outer wall of the housing portion 501 and the trigger portion may further limit an accommodating space or recess 504 into which the actuation portion 306 can be received when the operating member 302 is manually operated from a locking position to the unlocking position when the supporting arrangement 100 is in the raised position. Figure 10 shows a condition in which the movable portion is locked to the stationary portion with the operating member 302 being in a locking position. As is shown, the actuation portion 306 is located outside of the accommodating space 504 and is not in contact with the trigger portion 502. In order to unlock the locking mechanism 300, the operating member 302 needs to be brought from the locking position as shown in Figure 10 to the unlocking position as shown in Figure 9. In the unlocking position, the actuation portion 306 is arranged in the accommodating space 504. In this configuration, when the engaging assembly 350 is moved out of the receiving portion 500, the actuation portion 306 needs to pass the trigger portion 502. Again, the actuation portion 306 contacts the trigger portion 502 but is moved in a direction in which the engaging portions 352, 354 are even more retracted. After having passed the receiving portion 500, the operating member 302 returns to a defined position which is defined by a cooperation of the first surface section 311 of the cam portion 308 and the supporting surface 362. In this position, the actuation portion of 306 is again positioned such that it may contact the trigger portion 502 for operating the operating member 302 in locking direction when the movable portion 204 is moved upwards for bringing the supporting arrangement 100 to the raised position.

The load carrier 1 may optionally comprise a safety arrangement 700 as is already mentioned before. The safety arrangement 700 may be configured such that power is supplied to the drive assembly 600 only when the operating member 302 is in the unlocking position. The safety arrangement 700 can comprise a contact operated cut-off switch 702 or any other switch allowing to cut off the power supply to the drive assembly 600. The switch 702 is shown in Figure 8 and is also visible in Figure 9. The operating member 302 is configured and arranged such that the switch 702 is active when the operating member 302 is in the locking position. In the embodiment as shown in Figure 10, a portion of the operating member 302 covering the switch 702 contacts the switch 702. In other words, in the locking position, the operating member 302 pushes the switch 702. On the other hand, when the operating member 302 is in an unlocking position as shown in Figure 9, the switch 702 is released thereby activating or allowing the supply of power to the drive assembly 600. In this way, the safety arrangement 700 provides safety in that the drive assembly 600 cannot be operated when the locking mechanism 300 is active and locks the movable portion 204 with the stationary portion 202.

In addition or alternatively, the safety arrangement 700 can be configured to cut off the power supply to the drive assembly 600 when it is detected that an object is clamped between the stationary portion 202 and the movable portion 204 when moving the movable portion 204 towards the retracted position in which the supporting arrangement 100 is arranged in the raised position. The safety arrangement 700 can comprise a contact sensor arrangement 710 at a lower end portion 203 of the stationary portion 202. In the embodiment as shown in Figure 8, the contact sensor arrangement 710 is provided by providing a movable member or movable portion 704 on the lower end portion 203 in a protruding manner. Accordingly, an object which might be clamped between the movable portion 204 and the stationary portion 202 may get in contact with such a movable portion 704 first and may move the same. The movement of the movable portion 704 may be detected by a sensor which may in turn lead to a deactivation of the drive assembly 600, for example by cutting off the power supply to the drive assembly 600. In the embodiment, the switch 702 may be used as the sensor. For that, the movable portion 704 may comprise a contact portion 707 which is arranged on the movable portion 704 such that it may get in contact with the switch 702 and push the same when the movable portion 704 is moved. The movable portion 704 may be prebiased by an urging member 708, for example a return spring such that the movable portion 704 may return to its initial position when no force is applied on the movable portion 704 from outside, in particular a position in which the switch 702 is not operated. The movable portion 704 may be configured as an outer cover 706 which at least partially covers the receiving portion 500. Accordingly, with the above configuration, the movable member 704 may be configured movable such that the switch 702 is activated when the movable member has moved a predetermined distance. It is noted that such a safety arrangement 700 comprising a movable portion 704, for example the outer cover 706, may be provided on each lower end portion 203, for example at receiving portions 500 as shown in Figure 15. Accordingly, a switch 702 may be provided at each lower end portion 203.

In addition or alternatively to the above-described safety arrangement 700, the safety arrangement may further comprise features that allow to indicate correctly established locking of the supporting arrangement 100 in the raised position and/or an active power supply to the drive assembly 600. For that, the safety arrangement 700 may comprise an indicator 712 which may be provided on the drive assembly 600, for example on a casing 602 of the drive assembly. In this way, the indicator is clearly visible for a user. The indicator may be an obstacle indicator such as a signal light or maybe an acoustic indicator. The indicator may be coupled to the switch 702.

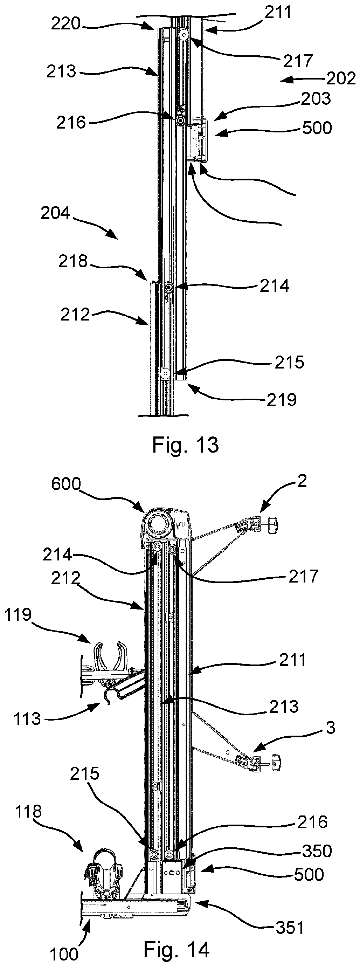

As already indicated before, the lifting mechanism 200 may be configured as a telescoping arrangement. In such a telescoping arrangement, the stationary portion 202 may comprise a first elongate profile 211 and the movable portion 204 may comprise a second elongate profile 212 as shown in Figures 13 and 14 as well as in Figure 2, for instance. Optionally, the configuration may comprise a third elongate profile 213. The third elongate profile 213 may be arranged between the first elongate profile 211 and the second elongate profile 213. The elongate profiles 211, 212, 213 may be coupled to each other such that adjacent profiles are movable with respect to each other. Adjacent profiles 211, 1212, 213 may be movably coupled to each other by means of two distinct coupling portions 214, 215, 216, 217 wherein the coupling portions may comprise rollers or roller bearings. In the retracted state, the coupling portions 214, 215, 216, 217 are arranged at a greater distance from each other than in an extended state. This allows for a better load distribution between adjacent profiles when the lifting mechanism 200 is in a retracted condition. Such a configuration is shown in Figures 13 and 14 in which a coupling portion 216 fixedly provided on the first elongate profile 211 at the lower end portion 203 of the stationary member 202 is an engagement with the third elongate profile 213, a coupling portion 217 fixedly provided at an upper end portion 220 of the third elongate profile 213 is an engagement with the first elongate profile 211, a coupling portion 214 fixedly provided on an upper end portion 218 of the second elongate profile 212 is an engagement with the third elongate profile 213 and a coupling portion 215 fixedly provided on a lower end portion 219 of the third elongate profile 213 is an engagement with the second elongate profile 212.

As already mentioned before, the supporting arrangement 100 can be pivotably coupled to the lifting mechanism 200 so as to be transferable between a stowing state and a use state by pivoting the supporting arrangement 100 towards and away from the lifting mechanism 200. As is also already mentioned before, the supporting arrangement 100 can comprise a locking arrangement 400 for arresting the supporting arrangement 100 in the use state. The locking arrangement 400 may comprise an engaging member 401. The configuration of the locking arrangement 400 can be gathered from joint consideration of Figures 16 and 17. The engaging member 401 can be engageable with the lower end portion 206 of the movable portion 204. For example, the engaging member 401 can be configured engageable with the lower portion 351 of the engaging assembly 350, for example with the above mentioned opening 353 provided in the lower portion 351. The locking arrangement 400 may further comprise an operating device 402 as is already shown in Figures 1 and 2 and is further shown in greater detail in Figure 17. The operating device 402 can be a rotatable handle 403 which is operatively coupled to the engaging member 401 by a force transfer mechanism 404. The force transfer mechanism 404 can be fully accommodated in the supporting arrangement 100, for example in the frame structure 102 of the supporting arrangement 100. The engaging member 401 can be prebiased towards engagement by means of an urging member 405. The force transfer mechanism 404 comprises a torsion bar 406 having a first coupling portion 407 which is coupled to a coupling section 409 formed in the rotatable handle 403. The torsion bar 406 is coupled to the operating device 402 such that it is integrally rotatable with the same. The torsion bar 406 further comprises a second coupling portion 408 which is configured to contact the coupling portion 411 of a tie rod 410. The torsion bar 406 is coupled to the tie rod 410 such that a rotation of the torsion bar 406 is transferred into a translatory movement of the tie rod 410. The tie rod 410 forms the engaging member 401 in the present embodiment. The tie rod comprises an engaging portion 412 which in an unoperated state of the locking arrangement 400 protrudes from an end portion of the frame structure 102 as is shown in Figure 16. Figure 16 shows a state in which the engaging portion 412 is in engagement with the lower portion 351 by being accommodated in the opening 353. In this way, the supporting arrangement 100 is locked to the movable portion 204 in such a manner that a pivoting movement of the same is not possible.

In conclusion, it is pointed out that the terms like "comprising" or the like are not intended to rule out the provision of additional elements or steps. Let it further be noted that "a" or "an" do not preclude a plurality. It is also noted that the reference numbers in the claims are not to be construed as limiting the scope of the claims.

## Claims

1. Load carrier (1) mountable to the rear of a vehicle, said load carrier (1) comprising
a supporting arrangement (100) for supporting a load to be transported,
a lifting mechanism (200) which is adapted to move said supporting arrangement (100) between a raised position and a lowered position, and
a locking mechanism (300) which is adapted to releasably lock said supporting arrangement (100) in said raised position,
wherein said lifting mechanism (200) comprises a stationary portion (202) fixedly mountable to said vehicle and a movable portion (204) movable relative to said stationary portion (202), wherein said supporting arrangement (100) is coupled to said movable portion (204), wherein said locking mechanism (300) comprises an engaging assembly (350) which is configured to releasably establish a positive locking between said movable portion (204) and said stationary portion (202) of said lifting mechanism (200) for at least limiting a movement of said movable portion (204) relative to said stationary portion (202),
wherein said engaging assembly (350) is provided on said movable portion (204) so as to be integrally movable with said supporting arrangement (100) or wherein said engaging assembly (350) is provided on said stationary portion (204),
**characterized in that**
said engaging assembly (350) comprises an engaging portion (352, 354) and said stationary portion (202) comprises a receiving portion (500) or vice versa, wherein said engaging portion (352, 354) is movable between an engaging position in which said engaging portion (352, 354) is engaged with said receiving portion (500) and a release position in which said engaging portion (352, 354) is not engaged with said receiving portion (500),
wherein said engaging assembly (350) comprises an urging member (360) which prebiases said engaging portion (352, 354) towards said engaging position, and wherein said locking mechanism (300) is configured to automatically establish locking when said supporting arrangement (100) reaches said raised position.

2. Load carrier (1) according to claim 1, wherein said engaging assembly (350) is provided on a lower end portion (206) of said movable portion (204).

3. Load carrier (1) according to claim 2, wherein said receiving portion (500) is provided in a lower end portion (203) of said stationary portion (202).

4. Load carrier (1) according to claim 3, wherein said urging member (360) comprises a spring, for example a coil spring.

5. Load carrier (1) according to one of the preceding claims, wherein said engaging assembly (350) comprises an operating member (302) operatively coupled to said engaging portion (352, 354) for moving said engaging portion (352, 354), said operating member (302) comprising an operating portion (304) configured to be grasped by a user for manually moving said operating member (302) to an unlocking position in which said engaging portion (352, 354) is positioned in said release position.

6. Load carrier (1) according to claim 5, wherein said stationary portion (202) comprises a trigger portion (502) adapted to cooperate with said engaging assembly (350) and wherein said operating member (302) comprises an actuation portion (306) configured to contact said trigger portion (502), wherein said trigger portion (502) and said actuation portion (306) are preferably configured such that said engaging assembly (350) is triggered when said operating member (302) passes said trigger portion (502), wherein said actuation portion (306) preferably slidingly contacts said trigger portion (502) upon passing said trigger portion (502).

7. Load carrier according to one of claims 5 and 6, wherein said engaging assembly (350) comprises a supporting portion (361), preferably a housing, for translatory movably supporting said engaging portion (352, 354), wherein said supporting portion (361) is configured to pivotably support said operating member (302) thereon, wherein said operating member (302) and said engaging portion (352, 354) are coupled to each other such that a pivoting movement of said operating member (302) is transferred into a translatory movement of said engaging portion (352, 354), wherein pivoting may take place parallel with an extension direction of the engaging portions and/or wherein said operating member (302) is arranged such that the actuation portion (306) contacts said trigger portion (502) and induces a rotation in the operating member (302) when the supporting portion (361) of the engaging assembly (350) is moved past the trigger portion (502).

8. Load carrier according to claim 7, wherein said supporting portion (361) comprises a supporting surface (362) for slidably supporting said operating member (302) thereon, wherein said operating member (302) comprises a coupling portion (310) for pivotably coupling said engaging portion (352, 354) to said operating member (302) and a cam portion (308) with a cam surface (309) contacting and riding on said supporting surface (362), wherein said operating member (302) is prebiased towards said supporting surface (362) and wherein said cam surface (309) is formed such that said operating member (302) comprises a self-locking capability.

9. Load carrier (1) according to claim 8, wherein said cam surface (309) comprises a first surface section (311) contacting said supporting surface (362) when said operating member (302) is in said unlocking position in which said engaging portion (352, 354) is in said release position, a second surface section (312) contacting said supporting surface (362) when said operating member (302) is in a locking position in which said engaging portion (352, 354) is in a locking position, and a third surface section (313) connecting said first surface section (311) and said second surface section (312), said third surface section (313) being formed as an apex portion.

10. Load carrier (1) according to one of claims 5 to 9, further comprising an electric drive assembly (600) comprising an electric motor for driving said movable portion (204) and a safety arrangement (700), said safety arrangement (700) being configured such that power is supplied to said drive assembly (600) only when said operating member (302) is in said unlocking position, wherein preferably said safety arrangement (700) comprises a contact operated cut-off switch (702) and said operating member (302) is configured and arranged such that contact with said cut-off switch (702) is released when said operating member (302) is positioned in said unlocking position, wherein said drive assembly (600) is preferably coupled to a control unit, said control unit preferably comprising a receiver for wirelessly receiving operating information from a remote controller.

11. Load carrier (1) according to claim 10, wherein said safety arrangement (700) is further configured to cut-off said power supply to said drive assembly (600) when it is detected that an object is clamped between said stationary portion (202) and said movable portion (204), wherein said safety arrangement (700) preferably comprises a contact sensor arrangement (710) on a lower end portion (203) of said stationary portion (202), for example comprising a movable member (704) protruding from said lower end portion (203) of said stationary portion (202), preferably an outer cover (706) at least partially covering said lower end portion (203), and a cut-off switch (702) for cutting off said power supply, said switch (702) being operable by said movable member (704) such that it is activated when said movable member (704) has moved a predetermined distance.

12. Load carrier (1) according to one of claims 5 to 11, further comprising a safety arrangement (700) configured to indicate a correctly established locking of said supporting arrangement (100) in said raised position and/or an active power supply, wherein said safety arrangement (700) preferably comprises an indicator (712), preferably an optical indicator such as a signal light, said indicator being coupled to said cut-off switch (702).

13. Load carrier (1) according to one of claims 1 to 12, wherein said lifting mechanism (200) is configured as a telescoping arrangement in which said stationary portion (202) comprises a first elongate profile (211) and said movable portion (204) comprises a second elongate profile (212) and, optionally, a third elongate profile (213), said elongate profiles (211, 212, 213) being coupled to each other such that adjacent profiles are movable with respect to each other, wherein adjacent profiles (211, 212, 213), for example said second profile (212) and said third profile (213) and/or said first profile (211) and said third profile (213), are movably coupled to each other by means of two coupling portions (214, 215, 216, 217) in such a manner that, in a retracted state, coupling portions (214, 215, 216, 217) of said adjacent profiles are arranged at a greater distance from each other than in an extended state, wherein in addition or alternatively said load carrier (1) comprises two stationary portions (202) and two movable portions (204) wherein said locking mechanism (300), in particular said engaging assembly (350), is configured to simultaneously establish a releasable positive locking between said movable portions (204) and said stationary portions (202) by means of a single engaging assembly (350).

14. Load carrier (1) according to one of claims 1 to 13, wherein said supporting arrangement (100) is pivotably coupled to said lifting mechanism (200) so as to be transferable between a stowing state and a use state by pivoting said supporting arrangement (100) towards and away from said lifting mechanism (200), wherein said supporting arrangement (100) may comprise a locking arrangement (400) for arresting said supporting arrangement (100) in said use state, said locking arrangement (400) may comprise an engaging member (401) preferably engageable with a lower end portion (206) of said movable portion (204), preferably with a lower portion (351) of said engaging assembly (350), for example with an opening (353) provided in said lower portion (351), and an operating device (402), preferably a rotatable handle (403), operatively coupled to said engaging member (401) by a force transfer mechanism (404), said force transfer mechanism (404) being preferably fully accommodated in said supporting arrangement (100), preferably in a frame structure (102) of said supporting arrangement (100), wherein said engaging member (401) is preferably prebiased towards engagement by means of an urging member (405).

15. Load carrier (1) according to one of the preceding claims, wherein said receiving portion (500) comprises an opening (503) for receiving said engaging portion (352, 354).

## Patentansprüche

1. Lastenträger (1), der an der Rückseite eines Fahrzeugs montierbar ist, wobei der Lastenträger (1) eine Stützanordnung (100) zum Stützen einer zu transportierenden Last,
einen Hebemechanismus (200), der dazu ausgelegt ist, die Stützanordnung (100) zwischen einer erhöhten Position und einer abgesenkten Position zu bewegen, und
einen Verriegelungsmechanismus (300), der dazu ausgelegt ist, die Stützanordnung (100) in der angehobenen Position lösbar zu verriegeln, umfasst,
wobei der Hebemechanismus (200) einen stationären Abschnitt (202), der fest an dem Fahrzeug montierbar ist, und einen beweglichen Abschnitt (204) umfasst, der in Bezug zu dem stationären Abschnitt (202) beweglich ist, wobei die Stützanordnung (100) an den beweglichen Abschnitt (204) gekoppelt ist, wobei der Verriegelungsmechanismus (300) eine Eingriffsanordnung (350) umfasst, die dazu konfiguriert ist, eine formschlüssige Verriegelung zwischen dem beweglichen Abschnitt (204) und dem stationären Abschnitt (202) des Hebemechanismus (200) zu bewirken, um ein Bewegen des beweglichen Abschnitts (204) in Bezug zu dem stationären Abschnitt (202) zumindest einzuschränken, wobei die Eingriffsanordnung (350) auf dem beweglichen Abschnitt (204) so bereitgestellt wird, dass sie mit der Stützanordnung (100) integral beweglich ist oder wobei die Eingriffsanordnung (350) auf dem stationären Abschnitt (204) bereitgestellt ist, **dadurch gekennzeichnet, dass** die Eingriffsanordnung (350) einen Eingriffsabschnitt (352, 354) umfasst und der stationäre Abschnitt (202) einen Aufnahmeabschnitt (500) umfasst oder umgekehrt, wobei der Eingriffsabschnitt (352, 354) zwischen einer Eingriffsposition, in der der Eingriffsabschnitt (352, 354) in den Aufnahmeabschnitt (500) eingreift, und einer Löseposition, in der der Eingriffsabschnitt (352, 354) nicht in den Aufnahmeabschnitt (500) eingreift, beweglich ist,
wobei die Eingriffsanordnung (350) ein Drückelement (360) umfasst, das den Eingriffsabschnitt (352, 354) in Richtung der Eingriffsposition vorspannt, und wobei der Verriegelungsmechanismus (300) dazu konfiguriert ist, automatisch eine Verriegelung herzustellen, wenn die Stützanordnung (100) die erhöhte Position erreicht.

2. Lastenträger (1) nach Anspruch 1, wobei die Eingriffsanordnung (350) an einem unteren Endabschnitt (206) des beweglichen Abschnitts (204) bereitgestellt ist.

3. Lastenträger (1) nach Anspruch 2, wobei der Aufnahmeabschnitt (500) in einem unteren Endabschnitt (203) des stationären Abschnitts (202) bereitgestellt ist.

4. Lastenträger (1) nach Anspruch 3, wobei das Drückelement (360) eine Feder, zum Beispiel eine Schraubenfeder, umfasst.

5. Lastenträger (1) nach einem der vorstehenden Ansprüche, wobei die Eingriffsanordnung (350) ein Betätigungselement (302) umfasst, das an den Eingriffsabschnitt (352, 354) wirkgekoppelt ist, um den Eingriffsabschnitt (352, 354) zu bewegen, wobei das Betätigungselement (302) einen Betätigungsabschnitt (304) umfasst, der dazu konfiguriert ist, von einem Benutzer gegriffen zu werden, um das Betätigungselement (302) manuell in eine Entriegelungsposition zu bewegen, in der der Eingriffsabschnitt (352, 354) in der Löseposition positioniert ist.

6. Lastenträger (1) nach Anspruch 5, wobei der stationäre Abschnitt (202) einen Auslöseabschnitt (502) umfasst, der dazu ausgelegt ist, mit der Eingriffsanordnung (350) zusammenzuwirken, und wobei das Betätigungselement (302) einen Betätigungsabschnitt (306) umfasst, der dazu konfiguriert ist, den Auslöseabschnitt (502) zu berühren, wobei der Auslöseabschnitt (502) und der Betätigungsabschnitt (306) vorzugsweise derart konfiguriert sind, dass die Eingriffsanordnung (350) dann ausgelöst wird, wenn das Betätigungselement (302) den Auslöseabschnitt (502) passiert, wobei der Betätigungsabschnitt (306) vorzugsweise den Auslöseabschnitt (502) beim Passieren des Auslösabschnitts (502) gleitend berührt.

7. Lastenträger nach einem der Ansprüche 5 und 6, wobei die Eingriffsanordnung (350) einen Stützabschnitt (361), vorzugsweise ein Gehäuse, zum translatorischen beweglichen Stützen des Eingriffsabschnitts (352, 354) umfasst, wobei der Stützabschnitt (361) dazu konfiguriert ist, das Betätigungselement (302) darauf schwenkbar zu stützen, wobei das Betätigungselement (302) und der Eingriffsabschnitt (352, 354) derart miteinander gekoppelt sind, dass eine Schwenkbewegung des Betätigungselements (302) in eine translatorische Bewegung des Eingriffsabschnitts (352, 354) übertragen wird, wobei das Schwenken parallel zu einer Erstreckungsrichtung der Eingriffsabschnitte erfolgen kann, und/oder wobei das Betätigungselement (302) derart angeordnet ist, dass der Betätigungsabschnitt (306) den Auslöseabschnitt (502) berührt und eine Drehung in dem Betätigungselement (302) induziert wird, wenn der Stützabschnitt (361) der Eingriffsanordnung (350) an dem Auslöseabschnitt (502) vorbei bewegt wird.

8. Lastenträger nach Anspruch 7, wobei der Stützabschnitt (361) eine Stützfläche (362) zum gleitbaren Stützen des Betätigungselements (302) darauf umfasst, wobei das Betätigungselement (302) einen Kopplungsabschnitt (310) zum schwenkbaren Koppeln des Eingriffsabschnitts (352, 354) an das Betätigungselement (302) und einen Nockenabschnitt (308) mit einer Nockenfläche (309), die die Stützfläche (362) berühren und auf dieser aufliegen, umfasst, wobei das Betätigungselement (302) in Richtung der Stützfläche (362) vorgespannt ist und wobei die Nockenfläche (309) derart ausgebildet ist, dass das Betätigungselement (302) eine Selbstsperrfähigkeit umfasst.

9. Lastenträger (1) nach Anspruch 8, wobei die Nockenfläche (309) einen ersten Oberflächenabschnitt (311) umfasst, der die Stützfläche (362) berührt, wenn sich das Betätigungselement (302) in der Entriegelungsposition befindet, in der sich der Eingriffsabschnitt (352, 354) in der Löseposition befindet, ein zweiter Oberflächenabschnitt (312) die Stützfläche (362) berührt, wenn sich das Betätigungselement (302) in einer Verriegelungsposition befindet, in der sich der Eingriffsabschnitt (352, 354) in einer Verriegelungsposition befindet, und einen dritten Oberflächenabschnitt (313), der den ersten Oberflächenabschnitt (311) und den zweiten Oberflächenabschnitt (312) miteinander verbindet, wobei der dritte Oberflächenabschnitt (313) als ein Scheitelabschnitt ausgebildet ist.

10. Lastenträger (1) nach einem der Ansprüche 5 bis 9, ferner umfassend eine elektrische Antriebsanordnung (600), die einen Elektromotor zum Antreiben des beweglichen Abschnitts (204) und eine Sicherheitsanordnung (700) umfasst, wobei die Sicherheitsanordnung (700) so konfiguriert ist, dass der Antriebsanordnung (600) nur dann Strom zugeführt wird, wenn sich das Betätigungselement (302) in der Entriegelungsposition befindet, wobei vorzugsweise die Sicherheitsanordnung (700) einen kontaktbetätigten Trennschalter (702) umfasst und das Betätigungselement (302) derart konfiguriert und angeordnet ist, dass der Kontakt mit dem Trennschalter (702) dann gelöst wird, wenn sich das Betätigungselement (302) vorzugsweise in einer Entriegelungsposition befindet, wobei die Antriebseinheit (600) vorzugsweise mit einer Steuereinheit gekoppelt ist, wobei die Steuereinheit vorzugsweise einen Empfänger zum drahtlosen Empfangen von Betriebsinformationen von einer Fernsteuerung umfasst.

11. Lastenträger (1) nach Anspruch 10, wobei die Sicherheitsanordnung (700) ferner dazu konfiguriert ist, die Stromversorgung an die Antriebsbaugruppe (600) dann zu unterbrechen, wenn erfasst wird, dass ein Objekt zwischen dem stationären Abschnitt (202) und dem beweglichen Abschnitt (204) geklemmt wird, wobei die Sicherheitsanordnung (700) vorzugsweise eine Kontaktsensoranordnung (710) auf einem unteren Endabschnitt (203) des stationären Abschnitts (202) umfasst, zum Beispiel ein bewegliches Element (704), das von dem unteren Endabschnitt (203) des stationären Abschnitts (202) hervorragt, vorzugsweise eine äußere Abdeckung (706), die den unteren Endabschnitt (203) zumindest teilweise abdeckt, und einen Trennschalter (702) zum Unterbrechen der Stromversorgung, wobei der Schalter (702) derart durch das bewegliche Element (704) betätigt werden kann, dass er dann aktiviert wird, wenn sich das bewegliche Element (704) um einen vorher festgelegten Abstand bewegt hat.

12. Lastenträger (1) nach einem der Ansprüche 5 bis 11, ferner umfassend eine Sicherheitsanordnung (700), die dazu konfiguriert ist, eine korrekt festgelegte Verriegelung der Stützanordnung (100) in der erhöhten Position und/oder eine aktive Stromversorgung anzuzeigen, wobei die Sicherheitsanordnung (700) vorzugsweise einen Indikator (712), vorzugsweise einen optischen Indikator, wie ein Signallicht, umfasst, wobei der Indikator mit dem Trennschalter (702) gekoppelt ist.

13. Lastenträger (1) nach einem der Ansprüche 1 bis 12, wobei der Hebemechanismus (200) als eine Teleskopanordnung konfiguriert ist, wobei der stationäre Abschnitt (202) ein erstes längliches Profil (211) umfasst und der bewegliche Abschnitt (204) ein zweites längliches Profil (212) und wahlweise ein drittes längliches Profil (213) umfasst, wobei die länglichen Profile (211, 212, 213) derart miteinander gekoppelt sind, dass benachbarte Profile in Bezug zueinander beweglich sind, wobei benachbarte Profile (211, 212, 213), zum Beispiel das zweite Profil (212) und das dritte Profil (213) und/oder das erste Profil (211) und das dritte Profil (213), mittels zweier Kopplungsabschnitte (214, 215, 216, 217) derart beweglich miteinander gekoppelt sind, dass in einem eingefahrenen Zustand Kopplungsabschnitte (214, 215, 216, 217) in einem größeren Abstand zueinander angeordnet sind als in einem ausgefahrenen Zustand, wobei zusätzlich oder alternativ der Lastenträger (1) zwei stationäre Abschnitte (202) und zwei bewegliche Abschnitte (204) umfasst, wobei der Verriegelungsmechanismus (300), insbesondere die Eingriffsanordnung (350), so konfiguriert sind, dass mittels einer einzigen Eingriffsanordnung (350) gleichzeitig eine lösbare formschlüssige Verriegelung zwischen den beweglichen Abschnitten (204) und den stationären Abschnitten (202) hergestellt werden kann.

14. Lastenträger (1) nach einem der Ansprüche 1 bis 13, wobei die Stützanordnung (100) schwenkbar mit dem Hebemechanismus (200) gekoppelt ist, um durch ein Schwenken der Stützanordnung (100) in Richtung zu dem Hebemechanismus (200) hin und von diesem weg zwischen einem Verstauzustand und einem Verwendungszustand überführbar zu sein, wobei die Stützanordnung (100) eine Verriegelungsanordnung (400) zum Arretieren der Stützanordnung (100) in dem Verwendungszustand umfassen kann, wobei die Verriegelungsanordnung (400) ein Eingriffselement (401) umfassen kann, das vorzugsweise mit einem unteren Endabschnitt (206) des beweglichen Abschnitts (204) in Eingriff gebracht werden kann, vorzugsweise mit einem unteren Abschnitt (351) der Eingriffsanordnung (350), beispielsweise mit einer Öffnung (353), die in dem unteren Abschnitt (351) vorhanden ist, und einer Betätigungsvorrichtung (402), vorzugsweise einem drehbaren Griff (403), der operativ mit dem Eingriffselement (401) durch einen Kraftübertragungsmechanismus (404) gekoppelt ist, wobei der Kraftübertragungsmechanismus (404) vorzugsweise vollständig in der Stützanordnung (100), vorzugsweise in einer Rahmenstruktur (102) der Stützanordnung (100), aufgenommen ist, wobei das Eingriffselement (401) vorzugsweise in Richtung eines Eingriffs durch ein Druckelement (405) vorgespannt ist.

15. Lastenträger (1) nach einem der vorstehenden Ansprüche, wobei der Aufnahmeabschnitt (500) eine Öffnung (503) zum Aufnehmen des Eingriffsabschnitts (352, 354) umfasst.

## Revendications

1. Porte-charge (1) pouvant être monté à l'arrière d'un véhicule, ledit porte-charge (1) comprenant un agencement de support (100) pour supporter une charge à transporter,
un mécanisme de levage (200) qui est conçu pour déplacer ledit agencement de support (100) entre une position relevée et une position abaissée, et
un mécanisme de verrouillage (300) qui est conçu pour verrouiller de façon libérable ledit agencement de support (100) dans ladite position relevée,
dans lequel ledit mécanisme de levage (200) comprend une partie stationnaire (202) pouvant être montée fixement audit véhicule et une partie mobile (204) mobile par rapport à ladite partie stationnaire (202), dans lequel ledit agencement de support (100) est couplé à ladite partie mobile (204), dans lequel ledit mécanisme de verrouillage (300) comprend un ensemble de mise en prise (350) qui est configuré pour établir de façon libérable un verrouillage positif entre ladite partie mobile (204) et ladite partie stationnaire (202) dudit mécanisme de levage (200) pour au moins limiter un mouvement de ladite partie mobile (204) par rapport à ladite partie stationnaire (202),
dans lequel ledit ensemble de mise en prise (350) est fourni sur ladite partie mobile (204) afin d'être mobile de façon solidaire avec ledit agencement de support (100) ou dans lequel ledit ensemble de mise en prise (350) est fourni sur ladite partie stationnaire (204), **caractérisé en ce que** ledit ensemble de mise en prise (350) comprend une partie de mise en prise (352, 354) et ladite partie stationnaire (202) comprend une partie de réception (500) ou inversement, dans lequel ladite partie de mise en prise (352, 354) est mobile entre une position de mise en prise dans laquelle ladite partie de mise en prise (352, 354) est en prise avec ladite partie de réception (500) et une position de libération dans laquelle ladite partie de mise en prise (352, 354) n'est pas en prise avec ladite partie de réception (500),
dans lequel ledit ensemble de mise en prise (350) comprend un élément de poussée (360) qui précontraint ladite partie de mise en prise (352, 354) en direction de ladite position de mise en prise, et dans lequel ledit mécanisme de verrouillage (300) est configuré pour établir automatiquement un verrouillage lorsque ledit agencement de support (100) atteint ladite position relevée.

2. Porte-charge (1) selon la revendication 1, dans lequel ledit ensemble de mise en prise (350) est fourni sur une partie d'extrémité inférieure (206) de ladite partie mobile (204).

3. Porte-charge (1) selon la revendication 2, dans lequel ladite partie de réception (500) est fournie dans une partie d'extrémité inférieure (203) de ladite partie stationnaire (202).

4. Porte-charge (1) selon la revendication 3, dans lequel ledit élément de poussée (360) comprend un ressort, par exemple un ressort hélicoïdal.

5. Porte-charge (1) selon une des revendications précédentes, dans lequel ledit ensemble de mise en prise (350) comprend un élément fonctionnel (302) couplé fonctionnellement à ladite partie de mise en prise (352, 354) pour déplacer ladite partie de mise en prise (352, 354), ledit élément fonctionnel (302) comprenant une partie fonctionnelle (304) configurée pour être saisie par un utilisateur pour déplacer manuellement ledit élément fonctionnel (302) vers une position de déverrouillage dans laquelle ladite partie de mise en prise (352, 354) est positionnée dans ladite position de libération.

6. Porte-charge (1) selon la revendication 5, dans lequel ladite partie stationnaire (202) comprend une partie de déclenchement (502) conçue pour coopérer avec ledit ensemble de mise en prise (350) et dans lequel ledit élément fonctionnel (302) comprend une partie d'actionnement (306) configurée pour venir en contact avec ladite partie de déclenchement (502), dans lequel ladite partie de déclenchement (502) et ladite partie d'actionnement (306) sont de préférence configurées de sorte que ledit ensemble de mise en prise (350) est déclenché lorsque ledit élément fonctionnel (302) passe ladite partie de déclenchement (502), dans lequel ladite partie d'actionnement (306) vient de préférence en contact de façon coulissante avec ladite partie de déclenchement (502) lorsqu'elle passe ladite partie de déclenchement (502).

7. Porte-charge selon l'une des revendications 5 et 6, dans lequel ledit ensemble de mise en prise (350) comprend une partie de support (361), de préférence un logement, pour supporter de façon mobile en translation ladite partie de mise en prise (352, 354), dans lequel ladite partie de support (361) est configurée pour supporter de façon pivotante ledit élément fonctionnel (302) sur celle-ci, dans lequel ledit élément fonctionnel (302) et ladite partie de mise en prise (352, 354) sont couplés l'un à l'autre de sorte qu'un mouvement pivotant dudit élément fonctionnel (302) se traduit en un mouvement de translation de ladite partie de mise en prise (352, 354), dans lequel le pivotement peut se dérouler parallèle à une direction d'extension des parties de mise en prise et/ou dans lequel ledit élément fonctionnel (302) est agencé de sorte que la partie d'actionnement (306) vient en contact avec ladite partie de déclenchement (502) et provoque une rotation dans l'élément fonctionnel (302) lorsque la partie de support (361) de l'ensemble de mise en prise (350) est déplacée au-delà de la partie de déclenchement (502).

8. Porte-charge selon la revendication 7, dans lequel ladite partie de support (361) comprend une surface de support (362) pour supporter de façon coulissante ledit élément fonctionnel (302) sur celle-ci, dans lequel ledit élément fonctionnel (302) comprend une partie de couplage (310) pour coupler de façon pivotante ladite partie de mise en prise (352, 354) audit élément fonctionnel (302) et une partie de came (308) avec une surface de came (309) venant en contact avec et chevauchant ladite surface de support (362), dans lequel ledit élément fonctionnel (302) est précontraint en direction de ladite surface de support (362) et dans lequel ladite surface de came (309) est formée de sorte que ledit élément fonctionnel (302) comprend une capacité autoverrouillante.

9. Porte-charge (1) selon la revendication 8, dans lequel ladite surface de came (309) comprend une première section de surface (311) venant en contact avec ladite surface de support (362) lorsque ledit élément fonctionnel (302) est dans ladite position de déverrouillage dans laquelle ladite partie de mise en prise (352, 354) est dans ladite position de libération, une deuxième section de surface (312) venant en contact avec ladite surface de support (362) lorsque ledit élément fonctionnel (302) est dans une position de verrouillage dans laquelle ladite partie de mise en prise (352, 354) est dans une position de verrouillage, et une troisième section de surface (313) connectant ladite première section de surface (311) et ladite deuxième section de surface (312), ladite troisième section de surface (313) étant formée en tant que partie de point culminant.

10. Porte-charge (1) selon l'une des revendications 5 à 9, comprenant en outre un ensemble d'entraînement électrique (600) comprenant un moteur électrique pour entraîner ladite partie mobile (204) et un agencement de sécurité (700), ledit agencement de sécurité (700) étant configuré de sorte que de la puissance n'est fournie audit ensemble d'entraînement (600) que lorsque ledit élément fonctionnel (302) est dans ladite position de déverrouillage, dans lequel de préférence ledit agencement de sécurité (700) comprend un interrupteur de coupure actionné par contact (702) et ledit élément fonctionnel (302) est configuré et agencé de sorte qu'un contact avec ledit commutateur de coupure (702) est libéré lorsque ledit élément fonctionnel (302) est positionné dans ladite position de déverrouillage, dans lequel ledit ensemble d'entraînement (600) est de préférence couplé à une unité de commande, ladite unité de commande comprenant de préférence un récepteur pour recevoir sans fil des informations fonctionnelles provenant d'une commande à distance.

11. Porte-charge (1) selon la revendication 10, dans lequel ledit agencement de sécurité (700) est configuré en outre pour couper ladite source de puissance vers ledit ensemble d'entraînement (600) lorsqu'il est détecté qu'un objet est serré entre ladite partie stationnaire (202) et ladite partie mobile (204), dans lequel ledit agencement de sécurité (700) comprend de préférence un agencement de capteur de contact (710) sur une partie d'extrémité inférieure (203) de ladite partie stationnaire (202), par exemple comprenant un élément mobile (704) faisant saillie de ladite partie d'extrémité inférieure (203) de ladite partie stationnaire (202), de préférence un couvercle extérieur (706) couvrant au moins partiellement ladite partie d'extrémité inférieure (203), et un interrupteur de coupure (702) pour couper ladite source de puissance, ledit interrupteur (702) pouvant être mis en fonctionnement par ledit élément mobile (704) de sorte qu'il est activé lorsque ledit élément mobile (704) s'est déplacé d'une distance prédéterminée.

12. Porte-charge (1) selon l'une des revendications 5 à 11, comprenant en outre un agencement de sécurité (700) configuré pour indiquer un verrouillage correctement établi dudit agencement de support (100) dans ladite position relevée et/ou une source de puissance active, dans lequel ledit agencement de sécurité (700) comprend de préférence un indicateur (712), de préférence un indicateur optique tel qu'un signal lumineux, ledit indicateur étant couplé audit interrupteur de coupure (702).

13. Porte-charge (1) selon l'une des revendications 1 à 12, dans lequel ledit mécanisme de levage (200) est configuré en tant qu'agencement télescopique dans lequel ladite partie stationnaire (202) comprend un premier profilé allongé (211) et ladite partie mobile (204) comprend un deuxième profilé allongé (212) et, facultativement, un troisième profilé allongé (213), lesdits profilés allongés (211, 212, 213) étant couplés les uns aux autres de sorte que des profilés adjacents sont mobiles les uns par rapport aux autres, dans lequel des profilés adjacents (211, 212, 213), par exemple ledit deuxième profilé (212) et ledit troisième profilé (213) et/ou ledit premier profilé (211) et ledit troisième profilé (213), sont couplés de façon mobile l'un à l'autre au moyen de deux parties de couplage (214, 215, 216, 217) d'une manière telle que, dans un état rétracté, des parties de couplage (214, 215, 216, 217) desdits profilés adjacents sont agencées à une plus grande distance les unes des autres que dans un état étendu, dans lequel en plus ou en variante ledit porte-charge (1) comprend deux parties stationnaires (202) et deux parties mobiles (204) dans lequel ledit mécanisme de verrouillage (300), en particulier ledit ensemble de mise en prise (350), est configuré pour établir simultanément un verrouillage positif libérable entre lesdites parties mobiles (204) et lesdites parties stationnaires (202) au moyen d'un unique ensemble de mise en prise (350).

14. Porte-charge (1) selon l'une des revendications 1 à 13, dans lequel ledit agencement de support (100) est couplé de façon pivotante audit mécanisme de levage (200) de façon à être transférable entre un état de rangement et un état d'utilisation en pivotant ledit agencement de support (100) en direction et à l'écart dudit mécanisme de levage (200), dans lequel ledit agencement de support (100) peut comprendre un agencement de verrouillage (400) pour arrêter ledit agencement de support (100) dans ledit état d'utilisation, ledit agencement de verrouillage (400) peut comprendre un élément de mise en prise (401) pouvant de préférence venir en prise avec une partie d'extrémité inférieure (206) de ladite partie mobile (204), de préférence avec une partie inférieure (351) dudit ensemble de mise en prise (350), par exemple avec une ouverture (353) fournie dans ladite partie inférieure (351), et un dispositif fonctionnel (402), de préférence une poignée rotative (403), couplé fonctionnellement audit élément de mise en prise (401) par un mécanisme de transfert de force (404), ledit mécanisme de transfert de force (404) étant de préférence accueilli complètement dans ledit agencement de support (100), de préférence dans une structure de châssis (102) dudit agencement de support (100), dans lequel ledit élément de mise en prise (401) est de préférence précontraint en prise au moyen d'un élément de poussée (405).

15. Porte-charge (1) selon une des revendications précédentes, dans lequel ladite partie de réception (500) comprend une ouverture (503) pour recevoir ladite partie de mise en prise (352, 354).
